# EUROPÄISCHE PATENTSCHRIFT

(11) **EP 3 831 701 B1**
(45) Veröffentlichungstag und Bekanntmachung des Hinweises auf die Patenterteilung: **04.09.2024**
(21) Anmeldenummer: 20208302.8
(22) Anmeldetag: 18.11.2020
(51) Int. Cl.: B62M 6/50, B60L 50/20, B60L 50/60, B60L 15/20, B62J 45/413, B62J 45/415

(54) **STEUERUNGSVERFAHREN FÜR EINEN ELEKTROMOTOR ZUM HALTEN DES ZWEIRADS AN EINER ERKANNTEN STEIGUNG DER FAHRTSTRECKE, STEUERGERÄT UND ZWEIRAD**
CONTROL METHOD FOR AN ELECTRIC MOTOR FOR HOLDING THE BICYCLE ON A DETECTED SLOPE OF THE DRIVING PATH, CONTROL DEVICE AND BICYCLE
PROCÉDÉ DE COMMANDE POUR UN MOTEUR ÉLECTRIQUE DESTINÉ AU MAINTIEN DU DEUX-ROUES SUR UNE PENTE DÉTECTÉE DE LA ROUTE, APPAREIL DE COMMANDE ET DEUX-ROUES

(30) Priorität: 06.12.2019 DE 102019219116
(43) Veröffentlichungstag der Anmeldung: 09.06.2021
(60) Teilanmeldung: 24163582.0
(73) Patentinhaber: Robert Bosch GmbH, 70442 Stuttgart (DE)
(72) Erfinder: Weinmann, Matthias, 72336 Balingen (DE); Baumgaertner, Daniel, 72072 Tuebingen (DE); Benzel, Timo, 72072 Tuebingen-Derendingen (DE)

(56) Entgegenhaltungen:
- EP-A1- 0 634 980
- EP-B1- 0 634 980
- DE-A1- 102011 083 072
- JP-A- H1 129 086

## Beschreibung

Die vorliegende Erfindung betrifft ein Steuerungsverfahren für einen Elektromotor als Antriebsmotor eines Zweirads, wobei mittels des Elektromotors ein Motordrehmoment zum Halten des Zweirads im Stillstand an einer erkannten Steigung einer Fahrtstrecke erzeugt wird.

### Stand der Technik

Bei Elektrofahrrädern beziehungsweise eBikes werden verschiedene Steuerungsverfahren zur Steuerung des Antriebs- beziehungsweise Elektromotors eingesetzt, beispielsweise ein Steuerungsverfahren, welches bei Bosch eBike Systems Schiebehilfe genannt wird. Eine computerimplementierte Software zur Schiebehilfe beziehungsweise das Steuerungsverfahren zur Schiebehilfe kann ein zweistufiges Aktivierungskonzept umfassen. Das Steuerungsverfahren wird beispielsweise über eine Schiebehilfe-Taste am Fahrradlenker für eine vorgegebene Schiebehilfe-Zeitspanne freigeschaltet. Nach einem Drücken einer Aktivierungs-Taste wird während der vorgegebene Schiebehilfe-Zeitspanne im freigeschalteten Zeitraum ein Nutzer beziehungsweise Radfahrer beim Schieben des Elektrofahrrads mittels des Elektromotors kraftunterstützt. Sobald die Aktivierungs-Taste gedrückt wird, erzeugt der Elektromotor ein langsam ansteigendes Drehmoment bis eine bestimmte Geschwindigkeit des Elektrofahrrads erreicht ist. Sobald die Aktivierungs-Taste vom Nutzer losgelassen wird, ist der Antrieb des Elektromotors beispielsweise nach ca. 150 ms drehmomentfrei. An steilen Hängen beziehungsweise Steigungen einer Fahrtstrecke und/oder mit einem schweren Elektrofahrrad beziehungsweise eBike ist es unangenehm bis gefährlich, wenn beim versehentlichen Loslassen des Nutzers beziehungsweise Abrutschen von der Aktivierungs-Taste zur Schiebehilfe der Elektromotor des Elektrofahrrads drehmomentfrei wird, da anschließend das Gewicht des Elektrofahrrads in der Regel direkt auf die Hände beziehungsweise auf die manuelle Haltekraft des Radfahrers übertragen wird. Die plötzlich benötigte, erhöhte manuelle Haltekraft zum Halten des Elektrofahrrads an der Steigung kann den Radfahrer überfordern beziehungsweise diesen aus dem Gleichgewicht bringen und unter Umständen sogar zum Sturz des Fahrers führen.

In der Schrift DE 10 2016 209 560 B3 ist ein Steuerungsverfahren zur Regelung eines Elektromotors für die Schiebehilfe eines Elektrofahrrads beschrieben. Das Steuerungsverfahren regelt den Elektromotor in Abhängigkeit eines erfassten Nickwinkels des Elektrofahrrads um dessen Querachse.

Die Schrift DE 10 2016 218 374 B3 offenbart ein Steuerungsverfahren zur Regelung des Elektromotors eines Elektrofahrrads zur Schiebehilfe des Elektrofahrrads. Bei einer erkannten Aktivierung der Schiebehilfe wird durch den Elektromotor ein Drehmoment zum Antrieb des Elektrofahrrads als Schiebehilfe erzeugt. Anschließend wird eine Beschleunigung des Elektrofahrrads in Richtung der Längsachse des Elektrofahrrads mittels eines ersten Sensors erfasst, wobei die Beschleunigung aufgrund einer manuellen Schiebe- oder Bremskraft des Radfahrers resultiert.

Dokument DE 103 47 713 A1 offenbart ein Verfahren zur Steuerung eines Schaltelementes in einem automatisierten Schaltgetriebe eines Kraftfahrzeugs, mit einer bei Stillstand des Kraftfahrzeugs aktivierbaren Funktion zum Festsetzen des Antriebsstranges.

Die Schrift DE 10 2015 215 427 A1 offenbart ein automatisches Feststellbremsensystem zum Betätigen einer Feststellbremse eines Fahrzeugs.

Die Aufgabe der vorliegenden Erfindung ist es, eine Unterstützung eines Nutzers beim Halten eines Zweirads an einer Steigung einer Fahrtstrecke zu verbessern.

### Offenbarung der Erfindung

Die vorstehende Aufgabe wird durch die unabhängigen Ansprüche 1, 8 und 9 gelöst.

Die vorliegende Erfindung betrifft ein Steuerungsverfahren für einen Elektromotor als Antriebsmotor eines Zweirads. Das Zweirad ist insbesondere ein Elektrofahrrad, welches vorteilhafterweise eine Trittkraft eines Nutzers beziehungsweise eines Radfahrers beim Pedalieren mittels des Elektromotors kraftunterstützen kann. Das Zweirad weist vorteilhafterweise eine Kraftunterstützung des Nutzers beim Schieben des Zweirads mittels des Elektromotors auf. Das Steuerungsverfahren umfasst eine Erfassung einer Drehzahl einer Komponente eines Antriebsstrangs des Elektrofahrrads, insbesondere eine Erfassung einer Drehzahl des Elektromotors und/oder einer Drehzahl eines Rads des Zweirads. Die erfasste Drehzahl repräsentiert eine Drehbewegung des Rotors des Elektromotors, wobei der Rotor insbesondere drehfest mit einem Abtriebsritzel und mittels mindestens einem Verbindungselement, beispielsweise einer Kette oder einem Riemen, mit einem Hinterrad des Zweirads als Antriebsrad verbunden ist. Alternativ oder zusätzlich umfasst das Steuerungsverfahren eine Erfassung eines Nickwinkels des Zweirads als Verfahrensschritt. Der Nickwinkel repräsentiert eine Drehung des Zweirads um eine Querachse des Zweirads. Anschließend wird eine Steigung einer Fahrtstrecke des Zweirads in Abhängigkeit der erfassten Drehzahl und/oder des erfassten Nickwinkels erkannt. Die Steigung kann vorteilhafterweise in Abhängigkeit des erzeugten Motordrehmoments und der erfassten Drehzahl abgeschätzt werden, da bei einem konstanten Drehmoment die Drehzahl an einer Steigung bei einer aufwärtsgerichteten Fahrt sinkt und bei einer abwärtsgerichteten Fahrt steigt. Die Steigung der Fahrtstrecke wird insbesondere vorteilhafterweise dann erkannt, wenn ein Betrag des Nickwinkels einen Winkelschwellenwert überschreitet. Mit anderen Worten wird in Abhängigkeit der erfassten Drehzahl und/oder des erfassten Nickwinkels erkannt, ob das Zweirad auf einer schiefe Ebene als Fahrtstrecke steht. In einem weiteren Verfahrensschritt erfolgt eine Erkennung einer Deaktivierung einer Schiebehilfe des Zweirads oder eine Erkennung einer Aktivierung einer Haltefunktion des Zweirads durch Erfassung einer Eingabe des Nutzers. Mit anderen Worten wird in dem Verfahren eine Deaktivierung einer aktivierten Schiebehilfe erkannt, beispielsweise durch ein Lösen einer Schiebehilfetaste durch den Nutzer. Es kann alternativ vorgesehen sein, dass das Zweirad beispielsweise eine Taste zur Aktivierung der Haltefunktion am Lenker des Zweirads aufweist. Die Aktivierung der Haltefunktion erfolgt durch das Erfassen einer Eingabe beziehungsweise ein Drücken dieser Taste zur Aktivierung der Haltefunktion durch den Nutzer. Anschließend wird ein Motordrehmoment mittels des Elektromotors zur Unterstützung des Haltens des Zweirads durch den Nutzer in Abhängigkeit der erkannten Deaktivierung der Schiebehilfe oder der erkannten Aktivierung der Haltefunktion und in Abhängigkeit der erkannten Steigung der Fahrtstrecke durchgeführt. Das erzeugte Motordrehmoment wirkt insbesondere entgegen einer auf dem Eigengewicht des Zweirads basierenden Hangabtriebskraft, wobei die Hangabtriebskraft parallel zur schiefen Ebene beziehungsweise zur Steigung der Fahrtstrecke hangabwärts wirkt. Das erzeugte Motordrehmoment gleicht insbesondere die Hangabtriebskraft zumindest teilweise aus, so dass die benötigte manuelle Haltekraft des Nutzers zum Halten des Zweirads, insbesondere im Stillstand des Zweirads, wenigstens reduziert wird. Vorteilhafterweise resultiert das erzeugte Motordrehmoment somit mit anderen Worten in einer Reduktion der benötigten manuellen Haltekraft des Nutzers zum Stillstand des Zweirads an der erkannten Steigung. Der Nutzer benötigt beispielsweise zum Halten des Zweirads im Stillstand beziehungsweise zum Ausgleichen der Hangabtriebskraft insbesondere keine oder lediglich eine gegenüber der Hangabtriebskraft geringere manuelle Haltekraft. Beispielsweise beträgt die durch die Kraftunterstützung mit dem erzeugten Motordrehmoment zum Halten des Zweirads im Stillstand benötigte Haltekraft des Nutzers maximal 50 Prozent oder maximal 10 Prozent der Hangabtriebskraft. Durch das Verfahren erfolgt somit vorteilhafterweise eine Kraftunterstützung des Nutzers zum Halten des Zweirads an einem Hang beziehungsweise an der erkannten Steigung, insbesondere im Stillstand des Zweirads. Das Verfahren funktioniert insbesondere bei hangabwärts und/oder hangaufwärts gerichteter Fahrtrichtung des Zweirads. Dadurch wird das Halten des Zweirads an der erkannten Steigung für den Nutzer unterstützt und komfortabel, insbesondere um das Zweirad im Stillstand zu halten.

Vorzugsweise erfolgt die Erzeugung des Motordrehmoments zum Halten des Zweirads zusätzlich in Abhängigkeit der erfassten Drehzahl und/oder des erfassten Nickwinkels. Dadurch kann das erzeugte Motordrehmoment an die Steigung beziehungsweise an die erfasste Drehzahl und/oder den erfassten Nickwinkel des Zweirads angepasst werden. Somit ist die Kraftunterstützung des Nutzers zum Halten des Zweirads an der Steigung vorteilhafterweise besonders komfortabel.

In einer bevorzugten Ausführung der Erfindung wird in einem weiteren Schritt eine Erfassung einer Längsbeschleunigung des Zweirads in Richtung der Längsachse des Zweirads und/oder eine Erfassung einer Geschwindigkeit des Zweirads in Richtung der Längsachse des Zweirads und/oder eine Erfassung einer Raddrehzahl eines Rads des Zweirads und/oder eine Erfassung einer Abfolge von Kamerabildern durchgeführt. In einem anschließenden Verfahrensschritt erfolgt eine Erkennung einer Bewegung des Zweirads an der erkannten Steigung. Diese Bewegung des Zweirads an der Steigung wird in Abhängigkeit der erfassten Längsbeschleunigung und/oder der erfassten Geschwindigkeit und/oder der erfassten Raddrehzahl und/oder in Abhängigkeit der erfassten Abfolge von Kamerabildern erkannt beziehungsweise ermittelt. Die Erkennung der Bewegung des Zweirads erfolgt somit vorteilhafterweise jeweils zuverlässig und schnell. Vorteilhafterweise wird als Bewegung des Zweirads eine Rückwärtsbewegung des Zweirads entgegen der Fahrtrichtung beziehungsweise ein Zurückrollen des Zweirads und/oder eine Vorwärtsbewegung des Zweirads in Fahrtrichtung beziehungsweise ein Vorwärtsrollen des Zweirads erkannt. Das erzeugte Motordrehmoments zum Halten des Zweirads wird anschließend in Abhängigkeit der erkannten Bewegung des Zweirads angepasst, insbesondere in Abhängigkeit eines erkannten beziehungsweise ermittelten Vorwärts- oder Zurückrollens des Zweirads. Mit anderen Worten wird in dieser Ausgestaltung der Erfindung ein Betrag des erzeugten Motordrehmoments in Abhängigkeit einer erkannten Bewegung des Zweirads beziehungsweise in Abhängigkeit eines erkannten Vorwärts- oder Zurückrollens des Zweirads an der Steigung angepasst. Dadurch resultiert der Vorteil, dass für den Nutzer das Halten des Zweirads weiter erleichtert wird, insbesondere da die benötigte manuelle Haltekraft vorteilhafterweise reduziert werden kann. Es resultiert insbesondere der Vorteil, dass für den Nutzer das Halten des Zweirads sehr komfortabel unterstützt wird, da das mittels des Elektromotors erzeugte Motordrehmoment laufend an eine erkannte Bewegung des Zweirads aufgrund einer sich gegebenenfalls ändernden aktuellen manuellen Haltekraft des Nutzers angepasst wird.

In einer weiteren Ausgestaltung des Verfahrens kann es vorgesehen sein, dass die Erzeugung des Motordrehmoments zur Unterstützung des Haltens des Zweirads zusätzlich in Abhängigkeit einer vorgegebenen Zeitspanne erfolgt. Mit anderen Worten wird das Motordrehmoment für die vorgegebene Zeitspanne erzeugt, wobei nach Ablauf der vorgegebenen Zeitspanne das erzeugte Motordrehmoment zur Unterstützung des Haltens des Zweirads stetig oder gestuft oder abrupt auf Null reduziert wird. Durch diese Ausgestaltung erfolgt eine Übergabe einer zum Halten des Zweirads benötigten Kraft an den Nutzer vorteilhafterweise komfortabel und sicher. Der Nutzer kann sich vorteilhafterweise mit anderen Worten beispielsweise langsam auf das vollständige Aufbringen einer manuellen Haltekraft zum Halten des Zweirads im Stillstand an der Steigung vorbereiten.

In einer Ausführung der Erfindung wird vor einer Beendigung der Erzeugung des Motordrehmoments zur Unterstützung des Haltens des Zweirads im Stillstand dem Nutzer eine Warnung angezeigt. Die Anzeige der Warnung erfolgt dadurch, dass zumindest ein kurzzeitig überhöhtes Impulsmotordrehmoment mittels des Elektromotors erzeugt wird, insbesondere wird das Impulsmotordrehmoment mehrfach wiederholt erzeugt, wobei das Impulsmotordrehmoment dazu eingerichtet ist, das
Zweirad, impulsartig in Längsrichtung des Zweirads zu bewegen, insbesondere mit minimaler Vorwärts- oder Rückwärtsbewegung. Mit anderen Worten kann das Zweirad in dieser Ausführung mittels des Elektromotors durch das zumindest einmalige kurzzeitig überhöhte beziehungsweise impulsartige Motordrehmoment beziehungsweise das Impulsmotordrehmoment motorisch gerüttelt werden. Alternativ oder zusätzlich kann die Anzeige der Warnung dadurch erfolgen, dass zumindest eine Komponente des Zweirads zu einer Vibration angeregt wird. Alternativ oder zusätzlich erfolgt die Anzeige der Warnung durch eine angezeigte visuelle Information, beispielsweise mittels eines Displays oder mittels eines Aufleuchten von LEDs, und/oder durch eine angezeigte beziehungsweise erzeugte akustische Information, beispielsweise mittels eines Lautsprechers am Zweirad. Durch diese Ausführung wird der Nutzer vor der Beendigung der Erzeugung des Motordrehmoments zur Unterstützung des Haltens des Zweirads gewarnt, so dass der Nutzer sich auf das vollständige Aufbringen einer manuellen Haltekraft zum Halten des Zweirads an der Steigung vorbereiten kann beziehungsweise von der Beendigung der Erzeugung des Motordrehmoments nicht überrascht wird.

Des Weiteren kann es vorgesehen sein, dass die Erkennung der Deaktivierung der Schiebehilfe oder die Aktivierung der Haltefunktion in Abhängigkeit einer erfassten Geschwindigkeit des Zweirads in Richtung der Längsachse des Zweirads beziehungsweise einer erfassten Drehzahl eines Rads des Zweirads und/oder in Abhängigkeit einer erfassten Haltekraft des Nutzers am Lenkergriff in Richtung der Längsachse des Zweirads erfolgt, wobei die erfasste Geschwindigkeit beziehungsweise die erfasste Drehzahl insbesondere einen Geschwindigkeitsschwellenwert unterschreitet und/oder die erfasste Haltekraft insbesondere einen Kraftschwellenwert überschreitet. Die Geschwindigkeit beziehungsweise die Drehzahl wird beispielsweise an einer Radnabe des Rads des Zweirads mittels eines Inkrementenrads und einem Induktionsgeber erfasst. Dabei erfolgt in einer nicht beanspruchten Ausführung vorteilhafterweise die Erkennung der Deaktivierung der Schiebehilfe oder die Aktivierung der Haltefunktion jeweils automatisch.

Vorzugsweise ist ferner vorgesehen, dass nach oder während der Erzeugung des Motordrehmoments zur Unterstützung des Haltens des Zweirads im Stillstand eine Erkennung einer Aktivierung der Schiebehilfe oder eine Erkennung einer Deaktivierung der Haltefunktion beziehungsweise ein gewünschter Abbruch der Erzeugung des Motordrehmoments zur Unterstützung des Haltens des Zweirads in Abhängigkeit einer
erfassten Längs- oder Querbeschleunigung des Zweirads erfolgt. Die erfasste Längs-oder Querbeschleunigung resultiert insbesondere aufgrund einer manuellen Kraft beziehungsweise Schiebekraft des Nutzers. Die Längsbeschleunigung repräsentiert dabei eine Änderung einer Bewegung des Zweirads in Richtung einer Längsachse des Zweirads. Die Querbeschleunigung repräsentiert ferner eine Änderung einer Bewegung des Zweirads in Richtung einer Quersachse des Zweirads. Besonders bevorzugt erfolgt die Erkennung der Aktivierung der Schiebehilfe oder der Deaktivierung der Haltefunktion zur Unterstützung des Haltens des Zweirads, wenn die erfasste Längs- oder Querbeschleunigung einen Beschleunigungsschwellenwert überschreitet oder ein Verlauf der erfassten Längs- oder Querbeschleunigung eine vorgegebene Abfolge an Richtungswechseln umfasst. Die vorgegebene Abfolge an Richtungswechseln repräsentiert beispielsweise ein Rütteln des Zweirads in Längs-oder Querrichtung durch den Nutzer. Beispielsweise wird im Stillstand des Zweirads an der Steigung der Fahrtstrecke eine Aktivierung der Schiebehilfe oder eine Deaktivierung der Haltefunktion beziehungsweise ein Abbruch der Erzeugung des Motordrehmoments zur Unterstützung des Haltens des Zweirads durch ruckartige Vorund Zurückbewegung des Zweirads in Längs-oder Querrichtung durch den Nutzer durchgeführt. Der Abbruch der Erzeugung des Motordrehmoments zur Unterstützung des Haltens des Zweirads erfolgt vorteilhafterweise durch stetige oder gestufte Reduzierung des erzeugten Motordrehmoments. In dieser Ausgestaltung der Erfindung kann vorteilhafterweise ein Start beziehungsweise die Aktivierung des Betriebs der Schiebehilfe-Funktion des Zweirads direkt und intuitiv während der Erzeugung des Motordrehmoments zur Unterstützung des Haltens des Zweirads und beispielsweise aus dem Stillstand des Zweirads an einer Steigung erfolgen, insbesondere ohne Erfassung einer Eingabe des Nutzers mittels einer Taste beziehungsweise eines Druckknopfes. Somit wird eine bessere Bedienbarkeit für den Nutzer zum Start der Schiebehilfe erreicht. Alternativ erfolgt der Abbruch der Erzeugung des Motordrehmoments zur Unterstützung des Haltens des Zweirads vorteilhafterweise für den Nutzer beziehungsweise Radfahrer intuitiv und leicht, insbesondere ohne Erfassung einer Eingabe des Nutzers mittels einer Taste beziehungsweise eines Druckknopfes. Ferner muss der Nutzer in dieser Ausgestaltung während der Erzeugung des Motordrehmoments nicht eine vorgegebene Zeitspanne abwarten bis das Zweirad sich wieder rückwärts oder im Schiebebetrieb bewegen lässt. Somit wird eine bessere Bedienbarkeit für den Nutzer zum Start der Schiebehilfe erreicht. Für diese Ausgestaltung resultiert ferner der Vorteil, dass während der Haltefunktion beziehungsweise der Erzeugung des Motordrehmoments zur Unterstützung des Haltens des Zweirads eingeklemmte Hände und Füße leicht befreit werden können. Folglich können durch diese Ausgestaltung einige Unfälle vermieden oder in ihrer Schwere vermindert werden. Ferner resultiert der Vorteil, dass an einer erkannten Steigung ein erzeugtes Motordrehmoment zur Unterstützung des Haltens des Zweirads lange bereitgestellt werden kann beziehungsweise lange Haltedauern an steilen Hängen realisiert werden können und der Nutzer des Zweirads beziehungsweise der Radfahrer selbst bestimmt, wann der Elektromotor abgeschaltet beziehungsweise das erzeugte Motordrehmoment reduziert oder die Schiebehilfe aktiviert wird.

Die Erfindung betrifft auch ein Steuergerät, wobei das Steuergerät dazu eingerichtet ist, das erfindungsgemäße Steuerungsverfahren durchzuführen.

Die Erfindung betrifft ferner ein Zweirad, insbesondere ein Elektrofahrrad, wobei das Zweirad ein erfindungsgemäßes Steuergerät umfasst. Vorteilhafterweise umfasst eine Antriebseinheit das Steuergerät und den Elektromotor.

Weitere Vorteile ergeben sich aus der nachfolgenden Beschreibung von Ausführungsbeispielen mit Bezug zu den Figuren.
Figur 1: Elektrofahrrad als Zweirad
Figur 2: Ablaufdiagramm des Steuerungsverfahrens als Blockschaltbild
Figur 3: Diagramm eines Verlaufs eines erzeugten Motordrehmoments

### Ausführungsbeispiele

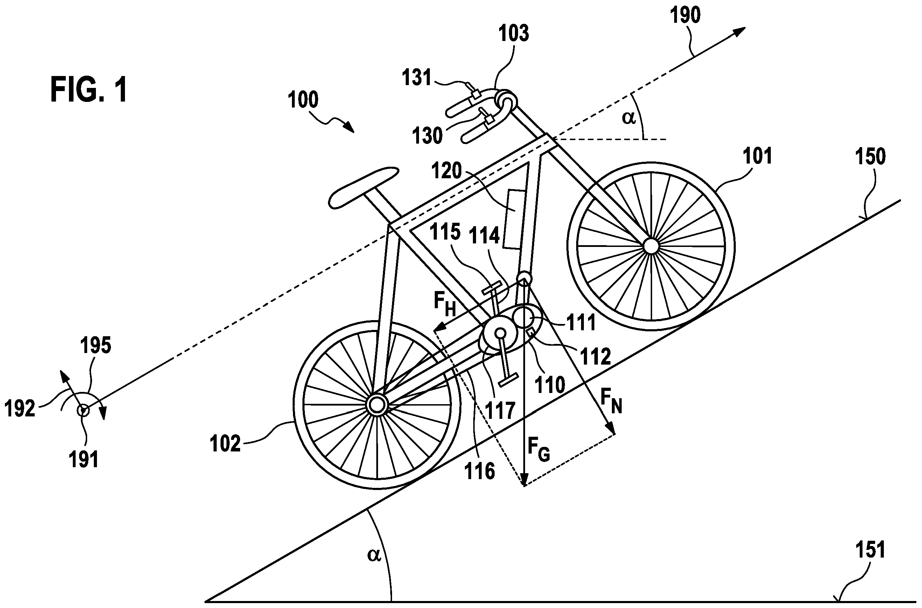

In Figur 1 ist ein Elektrofahrrad als Zweirad 100 dargestellt. Alternativ könnte das Zweirad 100 ein Motorrad sein, wobei das Motorrad mit einem Elektromotor angetrieben wird. Das Elektrofahrrad in Figur 1 weist ein Vorderrad 101 und ein Hinterrad 102 als Räder auf. Das Zweirad 100 in Figur 1 umfasst an einer Tretachse beziehungsweise Kurbelwelle eine Antriebseinheit 110, welche einen Elektromotor 111 als Antriebsmotor zur Unterstützung einer Trittkraft des Nutzers auf Pedale 115 aufweist, wobei die Pedale 115 mittels Kurbeln 114 mit der Tretachse beziehungsweise Kurbelwelle zur Erzeugung eines Fahrerdrehmoments verbunden sind. Der Elektromotor 111 ist beispielsweise mittels wenigstens eines Drehzahlreduktionsgetriebes der Antriebseinheit 110 mit der Kurbelwelle verbunden. Die Kurbelwelle und der Elektromotor 111 sind mittels eines Übersetzungsgetriebes mit einem Abtriebsritzel 117 der Antriebseinheit 110 verbunden. Das Abtriebsritzel 117 ist beispielsweise mittels eines Verbindungselements 116, beispielsweise einer Kette oder einem Riemen, mit einer Narbe des Hinterrades 102 als Antriebsrad zum Antrieb des Zweirads 100 verbunden. Es kann vorgesehen sein, wenigstens einen Drehzahlsensor an beziehungsweise in dem Elektromotor 111 und/oder an dem Drehzahlreduktionsgetriebe und/oder an dem Abtriebsritzel 117 und/oder an dem Verbindungselements 116 und/oder an dem Hinterrad 102 und/oder an dem Vorderrad 101 anzuordnen. Der Drehzahlsensor ist mit anderen Worten dazu eingerichtet, eine Drehzahl einer Komponente des Antriebsstrages des Elektrofahrrads zu erfassen, insbesondere die Drehzahl des Elektromotors 111 der Antriebseinheit 110. Ein Batteriemodul 120 ist am Zweirad 100 zur Energieversorgung der Antriebseinheit 110 angeordnet, insbesondere zur Energieversorgung des Elektromotors 111. Ferner umfasst die Antriebseinheit 110 eine inertiale Messeinheit beziehungsweise eine Sensoreinheit 112. Die Sensoreinheit 112 weist wenigstens einen Beschleunigungssensor und einen Drehratensensor auf. Vorteilhafterweise umfasst die Sensoreinheit 112 einen Beschleunigungssensor zur Erfassung einer Beschleunigung in Richtung der Längsachse 190 des Elektrofahrrads und einen Beschleunigungssensor zur Erfassung einer Beschleunigung in Richtung der Querachse 191 des Elektrofahrrads sowie einen Drehratensensor für eine Erfassung einer Drehrate zur Drehung 195 um die Querachse 191 des Elektrofahrrads. Am Lenker 103 des Zweirads 100 beziehungsweise des Elektrofahrrads ist ferner ein Taster beziehungsweise ein erster Schalter 130 zur Aktivierung und/oder Deaktivierung eines Schiebehilfe-Betriebs angeordnet. Es kann vorgesehen sein, dass ein zweiter Schalter 131 am Lenker 103 zur Aktivierung und/oder Deaktivierung eines unterstützten Haltebetriebs des Zweirads 100 angeordnet ist. Ein Bediengerät beziehungsweise HMI, welches am Lenker 103 oder an einem Lenkervorbau oder an einem Rahmen des Zweirads 100 angeordnet ist, kann den ersten Schalter 130 und den zweiten Schalter 131 umfassen. Die Schalter 130 und 131 sind jeweils dazu eingerichtet, eine Eingabe des Nutzers zur Aktivierung und/oder Deaktivierung des Schiebehilfe-Betriebs des Zweirads 100 beziehungsweise des unterstützten Haltebetriebs des Zweirads 100 zu erfassen. Das Zweirad 100 steht im Ausführungsbeispiel an einem Hang beziehungsweise einer schiefen Ebene beziehungsweise an einer Steigung einer Fahrtstrecke 150, wodurch das Zweirad 100 einen Nickwinkel α gegenüber der Horizontalen 151 aufweist. Da das Zweirad 100 mit Fahrtrichtung hangaufwärts gerichtet ist, ist in diesem Beispiel der Nickwinkel α gegenüber der Horizontalen 151 beispielsweise positiv. Das Zweirad 100 könnte alternativ auch in Fahrtrichtung hangabwärts gerichtet und somit beispielsweise einen negativen Nickwinkel α aufweisen. Basierend auf dem Gewicht des Elektrofahrrads beziehungsweise Zweirads 100 resultiert eine senkrecht nach unten wirkende Gewichtskraft F_{G}, welche in zwei Komponenten aufgeteilt beziehungsweise zerlegt werden kann. Eine Hangabtriebskraft F_{H} wirkt parallel zur Steigung der Fahrtstrecke 150 und senkrecht zu einer Normalkraft F_{N}, wobei die Normalkraft F_{N} senkrecht zur Fahrtstrecke 150 wirkt. Aufgrund der Hangabtriebskraft F_{H} resultiert ohne motorische Unterstützung eine Rückwärtsbewegung des Zweirads beziehungsweise ein Zurückrollen des Zweirads 100, falls der Nutzer beziehungsweise Radfahrer keine manuelle Haltekraft entgegengesetzt und im Betrag entsprechend der Hangabtriebskraft F_{H} aufbringt. Mit anderen Worten muss der Nutzer eine manuelle Haltekraft entgegengesetzt zur Hangabtriebskraft F_{H} aufbringen um das Zweirad 100 im Stillstand an der Steigung der Fahrtstrecke 150 zu halten. Der Nutzer wird allerdings durch das erfindungsgemäße Steuerungsverfahren beim Halten des Zweirads 100 an der Steigung der Fahrtstrecke 150 mittels des Elektromotors 100 durch Erzeugung eines entgegengesetzt zur Hangabtriebskraft F_{H} wirkendem Motordrehmoments M kraftunterstützt. An einer Steigung der Fahrtstrecke wird im Stillstand des Zweirads 100 erfindungsgemäß die Hangabtriebskraft F_{H} durch die Summe aus manueller Haltekraft und dem erzeugten Motordrehmoment M ausgeglichen. Die benötigte manuelle Haltekraft des Nutzers zum Halten des Zweirads im Stillstand an der Steigung der Fahrtstrecke 150 ist somit zumindest gegenüber der Hangabtriebskraft F_{H} reduziert. Vorzugsweise ist die benötigte manuelle Haltekraft des Nutzers zum Halten des Zweirads im Stillstand am Hang beziehungsweise der Steigung der Fahrtstrecke gegenüber der Hangabtriebskraft F_{H} klein, insbesondere mindestens halbiert und besonders bevorzugt geht die benötigte manuelle Haltekraft zum Halten des Zweirads im Stillstand an der Steigung der Fahrtstrecke 150 betragsmäßig gegen Null.

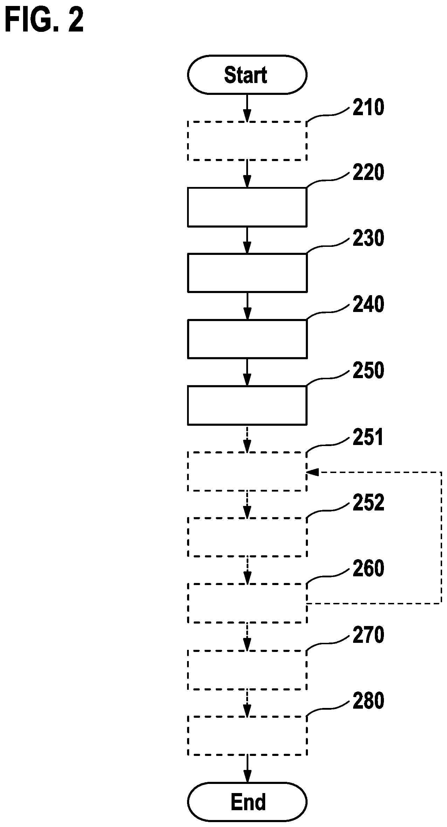

In Figur 2 ist ein Ablaufdiagramm des Steuerungsverfahrens als Blockschaltbild dargestellt. In einem optionalen Schritt 210 wird eine Aktivierung des Schiebehilfe-Betriebs des Zweirads 100 als Eingabe des Nutzers erfasst, die Erfassung der Aktivierung erfolgt beispielsweise mittels eines Drückens des ersten Schalters 130 beziehungsweise Tasters durch den Nutzer. Anschließend wird ein Schiebe-Motordrehmoment zum Antrieb des Zweirads 100 bis zu einer Maximalgeschwindigkeit erzeugt. Das erzeugte Schiebe-Motordrehmoment unterstützt den Nutzer beim Schieben des Zweirads 100. In einem in Figur 2 nicht dargestellten Verfahrensschritt 215 wird die Drehzahl einer Komponente des Antriebsstrangs des Elektrofahrrads erfasst, insbesondere die Drehzahl des Elektromotors und/oder die Drehzahl des Hinterrads 102 beziehungsweise des Antriebsrads. In einem zum Schritt 215 zusätzlichen oder alternativen Schritt 220 wird ein Nickwinkel α des Zweirads 100 erfasst, insbesondere mittels der Sensoreinheit 112 beziehungsweise der inertialen Messeinheit. Anschließend wird im Schritt 230 eine Steigung einer Fahrtstrecke 150 des Zweirads in Abhängigkeit der erfassten Drehzahl und/oder in Abhängigkeit des erfassten Nickwinkels α erkannt. Die Erkennung 230 der Steigung erfolgt vorzugsweise durch Vergleich der erfassten Drehzahl mit einer erwarteten Drehzahl zu einem erfassten beziehungsweise einem bekannten erzeugten Motordrehmoment, wobei die erwartete Drehzahl die Drehzahl zum erzeugten Motordrehmoment auf einer horizontalen Ebene ohne Steigung repräsentiert. Das erzeugte Motordrehmoment ist insbesondere das erzeugte Schiebe-Motordrehmoment Ms oder ein während der Fahrt in Abhängigkeit einer Trittkraft erzeugtes Motordrehmoment. Die Erkennung 230 der Steigung erfolgt insbesondere, wenn der Nickwinkel α einen Winkelschwellenwert überschreitet. Der Winkelschwellenwert beträgt beispielsweise 2°. Erfolgt die Erkennung 230 der Steigung der Fahrtstrecke 150 des Zweirads in Abhängigkeit der erfassten Drehzahl und in Abhängigkeit des erfassten Nickwinkels a, so wird die Steigung vorteilhafterweise besonders genau und zuverlässig erkannt. In einem weiteren Schritt 240 wird eine Deaktivierung der im Schritt 210 aktivierten Schiebehilfe beziehungsweise des Schiebehilfe-Betriebs des Zweirads 100 oder eine Aktivierung einer Haltefunktion des Zweirads erkannt. Die Erkennung 240 der Deaktivierung der im Schritt 210 aktivierten Schiebehilfe erfolgt bevorzugt durch Erfassung eines Loslassens des Tasters beziehungsweise ersten Schalters 130. Die alternative Erkennung 240 der Aktivierung einer Haltefunktion des Zweirads 100 erfolgt bevorzugt durch Erfassung einer Betätigung des zweiten Schalters 131. In einer nicht beanspruchten Ausführung kann die Erkennung 240 der Deaktivierung der Schiebehilfe oder die Aktivierung der Haltefunktion jeweils automatisiert in Abhängigkeit einer optional erfassten Geschwindigkeit des Zweirads 100 in Richtung der Längsachse 190 des Zweirads 100 und/oder in Abhängigkeit einer optional erfassten Haltekraft des Nutzers am Lenkergriff in Richtung der Längsachse des Zweirads 100 erfolgen, wobei die erfasste Geschwindigkeit insbesondere einen Geschwindigkeitsschwellenwert unterschreitet und/oder die erfasste Haltekraft insbesondere einen Kraftschwellenwert überschreitet. Die Haltekraft des Nutzers am Lenkergriff in Richtung der Längsachse des Zweirads 100 wird optional mittels Drucksensoren an Lenkergriffen des Lenkers 103 erfasst. Anschließend wird im Schritt 250 ein Motordrehmoment mittels des Elektromotors zur Unterstützung eines Haltens des Zweirads durch einen Nutzer in Abhängigkeit der erkannten Deaktivierung der Schiebehilfe oder der erkannten Aktivierung der Haltefunktion und in Abhängigkeit der erkannten Steigung der Fahrtstrecke erzeugt. Das Motordrehmoment M wird optional zusätzlich in Abhängigkeit der erfassten Drehzahl und/oder des erfassten Nickwinkels α erzeugt. In einem optionalen Schritt 251 werden eine Längsbeschleunigung des Zweirads in Richtung der Längsachse 190 des Zweirads 100 und/oder eine Geschwindigkeit v des Zweirads 100 in Richtung der Längsachse 190 des Zweirads 100 und/oder eine Raddrehzahl n eines Rads des Zweirads 100 und/oder eine optionale eine Abfolge von Kamerabildern erfasst. Im weiteren optionalen Schritt 252 kann es vorgesehen sein, eine Bewegung des Zweirads 100 an der erkannten Steigung der Fahrtstrecke 150 zu erkennen, wobei die Erkennung 252 der Bewegung des Zweirads 100 in Abhängigkeit der erfassten Längsbeschleunigung und/oder der erfassten Geschwindigkeit v und/oder der erfassten Raddrehzahl n und/oder in Abhängigkeit der erfassten Abfolge von Kamerabildern erfolgt. Aus der Abfolge von Kamerabildern von Kameras, welche an dem Zweirad angeordnet sind, kann beispielsweise ein optischer Fluss ermittelt werden, welcher eine Erkennung der Bewegung des Zweirads beziehungsweise eine Ermittlung des Vorwärts- oder Zurückrollens des Zweirads gegenüber der Umgebung erlaubt. Im optionalen Schritt 260 wird das erzeugte Motordrehmoment M zur Unterstützung des Haltens des Zweirads in Abhängigkeit der erkannten Bewegung des Zweirads angepasst, wobei die Anpassung vorteilhafterweise in Abhängigkeit der erfassten Längsbeschleunigung und/oder der erfassten Geschwindigkeit v und/oder der erfassten Raddrehzahl n und/oder in Abhängigkeit der erfassten Abfolge von Kamerabildern erfolgt. Das Motordrehmoment wird mittels des Elektromotors 111 erzeugt beziehungsweise angepasst. Mit anderen Worten wird das erzeugte Motordrehmoment im optionalen Schritt 260 solange in Abhängigkeit der erfassten Längsbeschleunigung und/oder der erfassten Geschwindigkeit v und/oder der erfassten Raddrehzahl n und/oder in Abhängigkeit der erfassten Abfolge von Kamerabildern erhöht bis keine Bewegung des Zweirads beziehungsweise kein Vorwärts- oder Zurückrollen des Zweirads mehr erkannt wird, wodurch das erzeugte Motordrehmoment an die aktuell aufgebrachte Haltekraft des Nutzers angepasst wird. In einem weiteren optionalen Schritt erfolgt eine Erfassung 280 einer Längs-oder Querbeschleunigung des Zweirads, insbesondere mittels der Sensoreinheit 112, wobei die erfasste Längs- oder Querbeschleunigung aufgrund einer manuellen Kraft des Nutzers resultiert. Anschließend wird im Schritt 280 eine Erkennung einer Aktivierung der Schiebehilfe oder eine Erkennung einer Deaktivierung der Haltefunktion in Abhängigkeit der erfassten Längs- oder Querbeschleunigung des Zweirads durchgeführt. Mit anderen Worten wird beispielsweise im Schritt 280 ein gewünschter Abbruch der Erzeugung 250 des Motordrehmoments zur Unterstützung des Haltens des Zweirads 100 in Abhängigkeit der erfassten Längs- oder Querbeschleunigung des Zweirads durchgeführt. Dabei erfolgt die Erkennung der Aktivierung der Schiebehilfe im Schritt 280 oder die Erkennung der Deaktivierung der Haltefunktion bevorzugt, wenn die erfasste Längs- oder Querbeschleunigung einen jeweiligen Beschleunigungsschwellenwert überschreitet oder, wenn die erfasste Längs- oder Querbeschleunigung eine vorgegebene Abfolge an Richtungswechseln umfasst. Somit kann beispielsweise ein Nutzer im Schritt 280 durch ein Rütteln des Zweirads in Quer- oder Längsrichtung das erzeugte Motordrehmoment zur Unterstützung des Haltens des Zweirads abschalten beziehungsweise die Haltefunktion deaktivieren und beispielsweise den Elektromotor 111 dadurch ohne Lösen eines Handgriffs um den Lenker 103 drehmomentfrei schalten oder die Schiebehilfe beziehungsweise den Schiebehilfe-Betriebsmodus des Zweirads zur Erzeugung eines Schiebe-Motordrehmoments mittels des Elektromotos aktivieren.

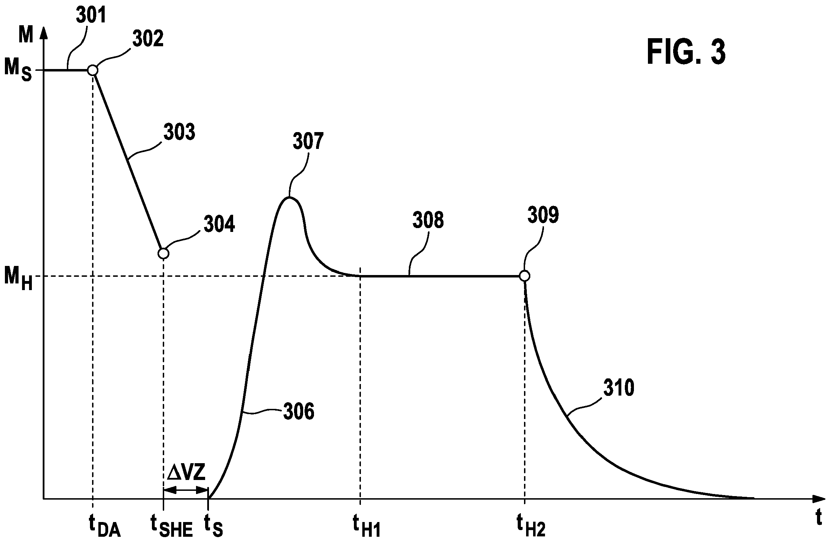

In Figur 3 ist ein Ausführungsbeispiel für ein Diagramm eines zeitlichen Verlaufs eine mittels des Elektromotors erzeugten Schiebe-Motordrehmoments und des im Schritt 250 erzeugten Motordrehmoments an einer Steigung einer Fahrtstrecke dargestellt. Zunächst ist der Schiebehilfe-Betriebsmodus aktiviert und es wird das Schiebe-Motordrehmoment M_{S} zum Antrieb des Zweirads 100 erzeugt, repräsentiert durch den Verlauf des Graphen in Abschnitt 301. Der Nutzer schiebt beispielsweise ein Zweirad hangaufwärts beziehungsweise eine Steigung der Fahrtstrecke hoch. Die Steigung der Fahrtstrecke wird sensorisch durch die Erfassung 220 des Nickwinkels im Schritt 230 und/oder die Erfassung 215 der Drehzahl zum erzeugten Schiebe-Motordrehmoment M_{S} ermittelt beziehungsweise erkannt. Zum Zeitpunkt t_{DA} wird die Schiebehilfe deaktiviert und anschließend das Schiebe-Motordrehmoment vom Punkt 302 langsam bis zum Zeitpunkt t_{SHE} beziehungsweise dem Punkt 304 reduziert, siehe Verlauf des Graphen in Abschnitt 303. Diese Deaktivierung der Schiebehilfe bzw. des Schiebehilfe-Betriebsmodus zum Zeitpunkt t_{DA} erfolgt beispielsweise durch Lösen des ersten Schalters 130. Der Elektromotor 111 wird also nicht unbedingt unmittelbar nach der Deaktivierung der Schiebehilfe drehmomentfrei sondern kann beispielsweise bis zum Zeitpunkt t_{SHE} ein langsam abnehmendes Schiebe-Motordrehmoment erzeugen. Die Zeitspanne zwischen dem Zeitpunkt t_{SHE} und dem Zeitpunkt t_{DA} der Deaktivierung der Schiebehilfe kann allerdings mit beispielsweise 150 Millisekunden (ms) kurz sein. Die Deaktivierung der Schiebehilfe wird im Schritt 240 zum Zeitpunkt t_{DA} erkannt. In Figur 3 wird das Zweirad zum Zeitpunkt t_{SHE} wegen des drehmomentfreien Elektromotors 111 lediglich durch die Haltekraft des Nutzers entgegen der Hangabtriebskraft F_{H} an der Steigung gehalten. Ab dem Zeitpunkt t_{S} wird durch den Verfahrensschritt 250 ein Motordrehmoment M zur Unterstützung des Haltens des Zweirads durch den Nutzer mittels des Elektromotors 111 erzeugt. Der Zeitpunkt ts fällt alternativ und vorzugsweise mit dem Zeitpunkt t_{SHE} zusammen, so dass keine Verzögerungszeitdauer ΔVZ vorliegt. Alternativ kann eine Verzögerungszeitdauer ΔVZ bis zur Erzeugung 250 des Motordrehmoments zur Unterstützung des Haltens des Zweirads durch den Nutzer vorgesehen sein, wie in Figur 3 dargestellt. In einer nicht beanspruchten Ausführung kann die Erkennung der Aktivierung der Haltefunktion beziehungsweise der Funktion zur Unterstützung des Haltens des Zweirads bevorzugt im Schritt 240 automatisch erfolgen, wenn zeitgleich zu einer erkannten Deaktivierung der Schiebehilfe eine Steigung der Fahrstrecke erkannt wird. Anschließend wird im Schritt 250 das Motordrehmoment zur Unterstützung des Haltens des Zweirads erzeugt, wobei dieses Motodrehmoment bevorzugt langsam betragsmäßig mittels einer Ansteuerung des Elektromotors 111 bis zu einem vorgegebenen Betrag erhöht wird, siehe Abschnitt 306 des Verlaufs des Graphen in Figur 3.

Es kann alternativ oder zusätzlich vorgesehen sein, dass die Erhöhung des Motordrehmoments im Schritt 250 solange durchgeführt wird, bis eine Bewegung des Zweirads 100 im Schritt 252 in Vorwärts- oder Rückwärtsrichtung beziehungsweise ein Vorwärts- oder Zurückrollen des Zweirads erkannt wird. Der Betrag des erzeugten Motordrehmoments zur Unterstützung des Haltens des Zweirads ist bei einer erkannten Bewegung des Zweirades zu hoch zur Unterstützung des Haltens des Zweirads und wird folglich anschließend abgesenkt beziehungsweise im Schritt 260 angepasst bis vorteilhafterweise keine Bewegung des Zweirads 100 im Schritt 252 erkannt wird, siehe Abschnitt 307 in Figur 3 und Schleife in Figur 2. Ab dem Zeitpunkt t_{H1} liegt ein Stillstand des Zweirads an der erkannten Steigung der Fahrtstrecke vor, wobei das Motordrehmoment M_{H} erzeugt wird, siehe Abschnitt 308 in Figur 3. Vorteilhafterweise muss der Nutzer ab dem Zeitpunkt t_{H1} eine kleine oder keine manuelle Haltekraft zum Halten des Zweirads im Stillstand an der Steigung der Fahrstrecke aufbringen. Anschließend wird bis zur Deaktivierung der Haltefunktion beziehungsweise der Unterstützung des Haltens des Zweirads zum Zeitpunkt t_{H2} beziehungsweise am Punkt 309 ein konstantes Motordrehmoment M_{H} erzeugt, so dass der Nutzer von dem Zeitpunkt t_{H1} bis zum Zeitpunkt t_{H2} durch das mittels des Elektromotors erzeugte Motordrehmoment M_{H} beim Haltens des Zweirads beziehungsweise zur manuellen Haltekraft beziehungsweise unterstützt wird. Mit anderen Worten wird die benötigte Haltekraft des Nutzers zum Halten des Zweirads im Stillstand an der Steigung der Fahrtstrecke vom Zeitpunkt t_{H1} bis zum Zeitpunkt t_{H2} reduziert. Die Deaktivierung der Haltefunktion beziehungsweise der Unterstützung des Haltens des Zweirads zum Zeitpunkt t_{H2} kann auf verschiedene Art und Weise erfolgen. Beispielsweise erfolgt die Deaktivierung durch eine Erfassung einer Eingabe des Nutzers, beispielsweise durch Betätigung des zweiten Schalters 131 am Zweirad. Alternativ erfolgt die Deaktivierung der Unterstützung des Haltens des Zweirads in Abhängigkeit einer erfassten akustischen Information beziehungsweise in Abhängigkeit eines Sprachbefehls des Nutzers. Besonders bevorzugt erfolgt die Deaktivierung 280 der Unterstützung des Haltens des Zweirads in Abhängigkeit einer erfassten Längs- oder Querbeschleunigung des Zweirads. Die Deaktivierung der Unterstützung des Haltens des Zweirads in Abhängigkeit einer erfassten Längs- oder Querbeschleunigung des Zweirads erfolgt insbesondere, wenn die erfasste Längs- oder Querbeschleunigung einen jeweiligen Beschleunigungsschwellenwert überschreitet. Alternativ oder zusätzlich erfolgt die Deaktivierung der Haltefunktion sobald ein Verlauf der erfassten Längs- oder Querbeschleunigung eine vorgegebene Abfolge an Richtungswechseln umfasst. Mit anderen Worten kann ein Nutzer die Haltefunktion beispielsweise durch ein Rütteln des Zweirads in Richtung der Quer- oder Längsachse des Zweirads mittels einer manuellen Kraft deaktivieren. Die Deaktivierung der Haltefunktion beziehungsweise der Abbruch der Erzeugung des Motordrehmoments zur Unterstützung des Haltens des Zweirads erfolgt vorteilhafterweise durch stetige oder gestufte Reduzierung des erzeugten Motordrehmoments ab dem Zeitpunkt t_{H2}, siehe Punkt 309 und Abschnitt 310 in Figur 3.

## Patentansprüche

1. Steuerungsverfahren für einen Elektromotor (111) als Antriebsmotor eines Zweirads (100), wobei das Steuerungsverfahren die folgenden Schritte aufweist
• Erfassung (215) einer Drehzahl einer Komponente des Antriebsstrangs des Zweirads (100), und/oder
• Erfassung (220) eines Nickwinkels (α) des Zweirads (100),
• Erkennung (230) einer Steigung einer Fahrtstrecke (150) des Zweirads (100) in Abhängigkeit der erfassten Drehzahl und/oder des erfassten Nickwinkels (α), und
• Erkennung (240) einer Deaktivierung einer Schiebehilfe des Zweirads (100) oder einer Aktivierung einer Haltefunktion des Zweirads (100),
wobei anschließend folgender Schritt durchgeführt wird:
• Erzeugung (250) eines Motordrehmoments mittels des Elektromotors (111) zur Unterstützung eines Haltens des Zweirads (100) durch einen Nutzer in Abhängigkeit der erkannten Deaktivierung der Schiebehilfe oder der erkannten Aktivierung der Haltefunktion und in Abhängigkeit der erkannten Steigung der Fahrtstrecke (150),
**dadurch gekennzeichnet, dass** die Erkennung (240) einer Deaktivierung der Schiebehilfe oder die Aktivierung einer Haltefunktion durch Erfassung einer Eingabe des Nutzers erfolgt.

2. Verfahren nach Anspruch 1, wobei die Erzeugung (250) des Motordrehmoments (M_{H}) zur Unterstützung des Haltens des Zweirads (100) zusätzlich in Abhängigkeit der erfassten Drehzahl und/oder des erfassten Nickwinkels (α) erfolgt.

3. Verfahren nach einem der Ansprüche 1 oder 2, wobei nach der Erzeugung (250) des Motordrehmoments folgende Schritte durchgeführt werden
• Erfassung (251) einer Längsbeschleunigung des Zweirads (100) in Richtung der Längsachse (190) des Zweirads (100) und/oder einer Geschwindigkeit (v) des Zweirads (100) in Richtung der Längsachse (190) des Zweirads (100) und/oder einer Raddrehzahl (n) eines Rads (101, 102) des Zweirads (100) und/oder einer Abfolge von Kamerabildern mittels einer Kamera am Zweirad (100), und
• Erkennung (252) einer Bewegung des Zweirads (100) an der erkannten Steigung in Abhängigkeit der erfassten Längsbeschleunigung und/oder der erfassten Geschwindigkeit und/oder der erfassten Raddrehzahl (n) und/oder in Abhängigkeit der erfassten Abfolge von Kamerabildern, und
• Anpassung (260) des erzeugten Motordrehmoments zur Unterstützung des Haltens des Zweirads in Abhängigkeit der erkannten Bewegung des Zweirads (100).

4. Verfahren nach einem der vorhergehenden Ansprüche, wobei die Erzeugung (250) des Motordrehmoments zur Unterstützung des Haltens des Zweirads zusätzlich in Abhängigkeit einer vorgegebenen Zeitspanne erfolgt.

5. Verfahren nach einem der vorhergehenden Ansprüche, wobei vor einer Beendigung der Erzeugung (250) des Motordrehmoments zur Unterstützung des Haltens des Zweirads folgender Schritt durchgeführt wird
• Anzeige (270) einer Warnung für den Nutzer, wobei die angezeigte Warnung dadurch erfolgt, dass
i. zumindest ein kurzzeitiges Impulsmotordrehmoment zur Warnung mittels des Elektromotors erzeugt wird, welches dazu eingerichtet ist, das Zweirad impulsartig in Längsrichtung des Zweirads (100) zu bewegen, und/oder
ii. zumindest eine Komponente des Zweirads (100) zu einer Vibration angeregt wird, und/oder
iii. eine visuelle und/oder akustische Information angezeigt wird.

6. Verfahren nach einem der vorhergehenden Ansprüche, wobei die Erkennung (240) der Deaktivierung der Schiebehilfe oder die Aktivierung der Haltefunktion in Abhängigkeit einer erfassten Geschwindigkeit (v) des Zweirads in Richtung der Längsachse (190) des Zweirads (100) und/oder in Abhängigkeit einer erfassten Haltekraft des Nutzers am Lenkergriff (103) in Richtung der Längsachse (190) des Zweirads erfolgt, wobei die erfasste Geschwindigkeit (v) insbesondere einen Geschwindigkeitsschwellenwert unterschreitet und/oder die erfasste Haltekraft insbesondere einen Kraftschwellenwert überschreitet.

7. Verfahren nach einem der vorhergehenden Ansprüche, wobei nach oder während der Erzeugung des Motordrehmoments zur Unterstützung des Haltens des Zweirads folgender Schritt durchgeführt wird
• Erkennung (280) einer Aktivierung der Schiebehilfe oder einer Deaktivierung der Haltefunktion in Abhängigkeit einer erfassten Längs- oder Querbeschleunigung des Zweirads, wobei die erfasste Längs- oder Querbeschleunigung insbesondere aufgrund einer manuellen Schiebekraft des Nutzers resultiert, wobei insbesondere
i. die erfasste Längs- oder Querbeschleunigung einen jeweiligen Beschleunigungsschwellenwert überschreitet, oder
ii. ein Verlauf der erfassten Längs- oder Querbeschleunigung eine vorgegebene Abfolge an Richtungswechseln umfasst.

8. Steuergerät, wobei das Steuergerät dazu eingerichtet ist, ein Steuerungsverfahren nach einem der Ansprüche 1 bis 7 durchzuführen.

9. Elektrofahrrad (100), wobei das Elektrofahrrad (100) ein Steuergerät nach Anspruch 8 umfasst.

## Claims

1. Control method for an electric motor (111) as a drive motor of a bicycle (100), the control method comprising the following steps
• detection (215) of a rotational speed of a component of the drive train of the bicycle (100) and/or
• detection (220) of a pitch angle (α) of the bicycle (100),
• identification (230) of a gradient of a route (150) for the bicycle (100) in dependence on the detected rotational speed and/or the detected pitch angle (α), and
• identification (240) of a deactivation of a pushing aid of the bicycle (100) or an activation of a holding function of the bicycle (100),
the following step being subsequently carried out:
• generation (250) of a motor torque by means of the electric motor (111) to assist holding of the bicycle (100) by a user in dependence on the identified deactivation of the pushing aid or the identified activation of the holding function and in dependence on the identified gradient of the route (150), **characterized in that** the identification (240) of a deactivation of the pushing aid or the activation of a holding function takes place by detection of an input by the user.

2. Method according to Claim 1, the generation (250) of the motor torque (M_{H}) to assist the holding of the bicycle (100) additionally taking place in dependence on the detected rotational speed and/or the detected pitch angle (α).

3. Method according to either of Claims 1 and 2, the following steps being carried out after the generation (250) of the motor torque
• detection (251) of a longitudinal acceleration of the bicycle (100) in the direction of the longitudinal axis (190) of the bicycle (100) and/or a velocity (v) of the bicycle (100) in the direction of the longitudinal axis (190) of the bicycle (100) and/or a wheel speed (n) of a wheel (101, 102) of the bicycle (100) and/or a sequence of camera images by means of a camera on the bicycle (100), and
• identification (252) of a movement of the bicycle (100) on the identified gradient in dependence on the detected longitudinal acceleration and/or the detected velocity and/or the detected wheel speed (n) and/or in dependence on the detected sequence of camera images, and
• adaptation (260) of the generated motor torque to assist the holding of the bicycle in dependence on the identified movement of the bicycle (100).

4. Method according to one of the preceding claims, the generation (250) of the motor torque to assist the holding of the bicycle additionally taking place in dependence on a specified time period.

5. Method according to one of the preceding claims, wherein, before ending the generation (250) of the motor torque to assist the holding of the bicycle, the following step is carried out
• indicating (270) a warning for the user, the indicated warning taking place in that
i. at least one brief impulsive motor torque is generated by means of the electric motor as a warning, designed to move the bicycle in an impulsive manner in the longitudinal direction of the bicycle (100), and/or
ii. at least one component of the bicycle (100) is induced to vibrate, and/or
iii. visual and/or acoustic information is indicated.

6. Method according to one of the preceding claims, the identification (240) of the deactivation of the pushing aid or the activation of the holding function taking place in dependence on a detected velocity (v) of the bicycle in the direction of the longitudinal axis (190) of the bicycle (100) and/or in dependence on a detected holding force of the user on the handlebar grip (103) in the direction of the longitudinal axis (190) of the bicycle, the detected velocity (v) being in particular below a velocity threshold value and/or the detected holding force being in particular above a force threshold value.

7. Method according to one of the preceding claims, the following step being carried out after or during the generation of the motor torque to assist the holding of the bicycle
• identification (280) of an activation of the pushing aid or a deactivation of the holding function in dependence on a detected longitudinal or transverse acceleration of the bicycle, the detected longitudinal or transverse acceleration resulting in particular from a manual pushing force of the user, with in particular
i. the detected longitudinal or transverse acceleration being above a respective acceleration threshold value, or
ii. a progression of the detected longitudinal or transverse acceleration comprising a specified sequence of changes in direction.

8. Control device, the control device being designed to carry out a control method according to one of Claims 1 to 7.

9. Electric bicycle (100), the electric bicycle (100) comprising a control device according to Claim 8.

## Revendications

1. Procédé de commande pour un moteur électrique (111) en tant que moteur d'entraînement d'un véhicule à deux roues (100), le procédé de commande comprenant les étapes suivantes
• acquisition (215) d'une vitesse de rotation d'un composant de la chaîne cinématique du véhicule à deux roues (100), et/ou
• acquisition (220) d'un angle de tangage (α) du véhicule à deux roues (100),
• reconnaissance (230) d'une pente d'un trajet de déplacement (150) du véhicule à deux roues (100) en fonction de la vitesse de rotation acquise et/ou de l'angle de tangage (α) acquis, et
• reconnaissance (240) d'une désactivation d'une aide à la poussée du véhicule à deux roues (100) ou d'une activation d'une fonction de maintien du véhicule à deux roues (100),
l'étape suivante étant ensuite exécutée :
• génération (250) d'un couple moteur au moyen du moteur électrique (111) en vue d'assister un maintien du véhicule à deux roues (100) par un utilisateur en fonction de la désactivation reconnue de l'aide à la poussée ou de l'activation reconnue de la fonction de maintien et en fonction de la pente reconnue du trajet de déplacement (150),
**caractérisé en ce que** la reconnaissance (240) d'une désactivation de l'aide à la poussée ou de l'activation d'une fonction de maintien est effectuée par la détection d'une saisie de l'utilisateur.

2. Procédé selon la revendication 1, la génération (250) du couple moteur (MH) en vue d'assister le maintien du véhicule à deux roues (100) s'effectuant en plus en fonction de la vitesse de rotation acquise et/ou de l'angle de tangage (α) acquis.

3. Procédé selon l'une des revendications 1 ou 2, les étapes suivantes étant exécutées après la génération (250) du couple moteur
• acquisition (251) d'une accélération longitudinale du véhicule à deux roues (100) dans la direction de l'axe longitudinal (190) du véhicule à deux roues (100) et/ou d'une vitesse (v) du véhicule à deux roues (100) dans la direction de l'axe longitudinal (190) du véhicule à deux roues (100) et/ou d'une vitesse de rotation de roue (n) d'une roue (101, 102) du véhicule à deux roues (100) et/ou d'une séquence d'images de caméra au moyen d'une caméra sur le véhicule à deux roues (100), et
• reconnaissance (252) d'un mouvement du véhicule à deux roues (100) sur la pente reconnue en fonction de l'accélération longitudinale acquise et/ou de la vitesse acquise et/ou de la vitesse de rotation de roue (n) acquise et/ou en fonction de la séquence acquise d'images de caméra, et
• adaptation (260) du couple moteur généré, en vue d'assister le maintien du véhicule à deux roues en fonction du mouvement reconnu du véhicule à deux roues (100) .

4. Procédé selon l'une des revendications précédentes, la génération (250) du couple moteur en vue d'assister le maintien du véhicule à deux roues étant en outre réalisée en fonction d'un intervalle de temps prédéterminé.

5. Procédé selon l'une des revendications précédentes, l'étape suivante étant exécutée avant une cessation de la génération (250) du couple moteur en vue d'assister le maintien du véhicule à deux roues
• affichage (270) d'un avertissement pour l'utilisateur, l'avertissement affiché étant effectué par le fait que
i. au moins un couple moteur impulsionnel de courte durée destiné à l'avertissement est généré au moyen du moteur électrique, lequel est conçu pour déplacer le véhicule à deux roues par impulsions dans la direction longitudinale du véhicule à deux roues (100), et/ou
ii. au moins un composant du véhicule à deux roues (100) est excité en une vibration, et/ou
iii. une information visuelle et/ou sonore est indiquée.

6. Procédé selon l'une des revendications précédentes, la reconnaissance (240) de la désactivation de l'aide à la poussée ou de l'activation de la fonction de maintien s'effectuant en fonction d'une vitesse (v) acquise du véhicule à deux roues dans la direction de l'axe longitudinal (190) du véhicule à deux roues (100) et/ou en fonction d'une force de maintien acquise de l'utilisateur sur la poignée de guidon (103) dans la direction de l'axe longitudinal (190) du véhicule à deux roues, la vitesse (v) acquise étant notamment inférieure à une valeur de seuil de vitesse et/ou la force de maintien acquise étant notamment supérieure à une valeur de seuil de force.

7. Procédé selon l'une des revendications précédentes, l'étape suivante étant exécutée après ou pendant la génération du couple moteur en vue d'assister au maintien du véhicule à deux roues
• reconnaissance (280) d'une activation de l'aide à la poussée ou d'une désactivation de la fonction de maintien en fonction d'une accélération longitudinale ou transversale acquise du véhicule à deux roues, l'accélération longitudinale ou transversale acquise résultant notamment d'une force de poussée manuelle de l'utilisateur, en particulier
i. l'accélération longitudinale ou transversale acquise étant supérieure à une valeur de seuil d'accélération respective, ou
ii. une évolution de l'accélération longitudinale ou transversale acquise comprenant une séquence prédéfinie de changements de direction.

8. Contrôleur, le contrôleur étant conçu pour mettre en œuvre un procédé de commande selon l'une des revendications 1 à 7.

9. Bicyclette électrique (100), la bicyclette électrique (100) comprenant un contrôleur selon la revendication 8.
